# EUROPÄISCHE PATENTSCHRIFT

(11) **EP 1 427 611 B1**
(45) Veröffentlichungstag und Bekanntmachung des Hinweises auf die Patenterteilung: **07.06.2006**
(21) Anmeldenummer: 02774291.5
(22) Anmeldetag: 14.08.2002
(51) Int. Cl.: B60R 21/01

(54) **VORRICHTUNG ZUR GEWICHTSKLASSIFIZIERUNG VON PERSONEN**
DEVICE FOR THE WEIGHT CLASSIFICATION OF PEOPLE
DISPOSITIF DE CLASSIFICATION DE PERSONNES SELON LEUR POIDS

(30) Priorität: 05.09.2001 DE 10143326
(43) Veröffentlichungstag der Anmeldung: 16.06.2004
(73) Patentinhaber: ROBERT BOSCH GMBH, 70442 Stuttgart (DE)
(72) Erfinder: NITSCHKE, Werner, 71254 Ditzingen (DE); DROBNY, Wolfgang, 74072 Heilbronn (DE); GIESEL, Rüdiger, 70376 Stuttgart (DE); TRUCKENBRODT, Sven, 70374 Stuttgart (DE); WOLF, Rene, 71701 Schwieberdingen (DE); MAIER, Hermann, 71706 Markgröningen (DE); MARCHTHALER, Reiner, 73333 Gingen (DE)
(86) Internationale Anmeldenummer: PCT/DE2002/002975
(87) Internationale Veröffentlichungsnummer: WO 2003/026934

(56) Entgegenhaltungen:
- WO-A-99/38731
- LU-A- 90 042
- US-A- 5 732 375

## Beschreibung

### Stand der Technik

Die Erfindung betrifft eine Vorrichtung zur Gewichtsklassifizierung von Personen, insbesondere zur Insassenklassifizierung in einem Kraftfahrzeug. Die Vorrichtung umfasst eine Sensoranordnung, die in einem Sitz für die zu klassifizierende Person verbaut ist, und eine Auswerteeinheit. Die Sensoren der Sensoranordnung sind druckempfindlich.

Derartige Vorrichtungen zur Gewichtsklassifizierung von Personen werden in der Praxis beispielsweise in Kraftfahrzeugen eingesetzt, um die individuelle Sitzbelegung beim Auslösen von Rückhaltemitteln, wie mehrstufigen Airbags und Gurtstraffern, zu berücksichtigen. Dazu werden charakteristische Daten für die einzelnen Insassen erfasst, die Rückschlüsse auf das jeweilige Gewicht zulassen. Jedem Insassen wird dann eine Gewichtsklasse zugeordnet und dem Airbagsteuergerät übermittelt.

Bei einem bekannten Insassenklassifizierungssystem werden als charakteristische Daten Druckwerte erfasst, die die Druckverteilung im Sitz wiedergeben. Diese Systeme haben sich in der Praxis bewährt, da auf der Basis der Druckverteilung im Sitz eine zuverlässige Gewichtsklassifizierung vorgenommen werden kann, die weitgehend unabhängig von äußeren Bedingungen, wie Kälte oder Verschleiß ist. Die Datenerfassung erfolgt hier mit Hilfe einer im Sitz verbauten Sensormatte mit druckempfindlichen Sensorzellen, die in einer Matrix angeordnet sind.

Die Druckverteilung im Sitz lässt in mehrerlei Hinsicht Rückschlüsse auf das Gewicht des Sitzenden zu. Zunächst sind die von den einzelnen Sensorzellen erfassten Druckwerte per se natürlich abhängig von der jeweiligen Druckbeaufschlagung und damit vom Gewicht des Sitzenden. Auch die Anzahl der aktivierten Sensorzellen hängt in der Regel vom Gewicht der jeweiligen Person ab, da das Gewicht gewöhnlich mit der Ausdehnung der Person korreliert ist. Außerdem ist der Abstand der Hüftknochen bei schwereren Personen im Durchschnitt größer als bei leichteren Personen. Dadurch liegen die Profilschwerpunkte bei schwereren Personen weiter auseinander als bei leichteren Personen, was sich ebenfalls in der Druckverteilung wiederspiegelt.

Bei dem bekannten Insassenklassifizierungssystem wird die Druckverteilung im Sitz in Form einer Wertematrix erfasst, wobei jeder Wert der Wertematrix dem Messwert einer Sensorzelle der Sensormatte entspricht. Zur Ermittlung einer Gewichtsklasse werden alle Werte der Wertematrix mit Hilfe einer Auswerteeinheit ausgewertet. Die Auswertung umfasst auch eine Kindersitzerkennung; außerdem liefert die Auswertung Informationen über die Sitzposition und insbesondere einen etwaigen Fehlgebrauch des Sitzes, wie z.B. Knien auf dem Sitz, etc.. Dementsprechend ist die Auswertung der Wertematrix - je nach Anzahl der Sensorzellen - relativ aufwendig. Außerdem ist bei dem bekannten Insassenklassifizierungssystem für jeden Sitz, der mit einer Sensormatte ausgestattet ist, auch ein eigenes Steuergerät als Auswerteeinheit vorgesehen, das ebenfalls im Sitz verbaut ist.

Aus LU 90 042 A ist der Oberbegriff von Anspruch 1 bekannt.

### Vorteile der Erfindung

Mit der vorliegenden Erfindung wird vorgeschlagen, eine Vorrichtung der eingangs genannten Art so auszugestalten und weiterzubilden, dass die von der Sensoranordnung erfasste Druckverteilung zuverlässig aber mit relativ geringem Aufwand ausgewertet werden kann.

Dies wird erfindungsgemäß durch die Merkmale von Anspruch 1 erreicht.

Erfindungsgemäß ist erkannt worden, dass eine detaillierte Auswertung der Druckverteilung nicht unbedingt erforderlich ist, um das Gewicht einer Person zu-verlässig zu klassifizieren, wenn von einem bestimmungsgemäßen Gebrauch des Sitzes ausgegangen werden kann und die Sitzposition mit tolerierbaren Abweichungen bekannt ist.

So stellt beispielsweise die Gewichtsklassifizierung auf der Beifahrerseite wesentlich höhere Anforderungen an die Auswertung der Druckverteilung im Sitz als die Gewichtsklassifizierung auf der Fahrerseite, da sich die Sitzposition des Fahrers während der Fahrt allenfalls geringfügig ändert und ein Fehlgebrauch des Fahrersitzes ausgeschlossen werden kann, genauso wie das Vorhandensein eines Kindersitzes auf dem Fahrersitz. Insofern kann die Fahrerseite mit einem gegenüber der Beifahrerseite reduzierten System zur Gewichtsklassifizierung ausgestattet werden.

Erfindungsgemäß ist ferner erkannt worden, dass unter den voranstehend beschriebenen Voraussetzungen, also bei bestimmungsgemäßem Gebrauch des Sitzes und Kenntnis der Sitzposition, die Messwerte mehrerer Sensoren zu einem Messwert zusammengefasst werden können, der dann von der Auswerteeinheit ausgewertet wird. Dadurch lässt sich der Aufwand für die Auswertung wesentlich reduzieren. Wenn beim Zusammenfassen der Sensoren zu Sensorgruppen die Kenntnis der Sitzposition berücksichtigt worden ist, muss sich dieses Zusammenfassen und der dadurch bedingte Informationsverlust auch nicht nachteilig auf die Qualität der Klassifizierung auswirken.

Grundsätzlich gibt es unterschiedliche Möglichkeiten für die Realisierung der erfindungsgemäßen Vorrichtung und insbesondere für das Zusammenfassen der Sensoren zu Sensorgruppen.

Da alle Sensoren der Sensoranordnung in einem Sitz verbaut sind, können die Sensoren in einfacher Weise schaltungstechnisch in Sensorgruppen zusammengefasst werden. Dazu können die Sensoren einer Sensorgruppe beispielsweise parallel geschaltet werden. Bei einer schaltungstechnischen Zusammenfassung der Sensoren wird der Auswerteeinheit lediglich ein Messwert pro Sensorgruppe zugeleitet. Diese Variante erweist sich insbesondere dann als vorteilhaft, wenn sich die Auswerteeinheit nicht in dem Sitz befindet, in dem die Sensoranordnung verbaut ist. Entsprechend der reduzierten Anzahl der auszuwertenden und damit an die Auswerteeinheit zu übertragenden Messwerte sind hier nur relativ wenige Leitungen für die Übertragung der Messwerte an die Auswerteeinheit erforderlich. Eine solchermaßen realisierte erfindungsgemäße Vorrichtung kann beispielsweise vorteilhaft auf der Fahrerseite eines Kraftfahrzeugs eingesetzt werden, dessen Beifahrersitz mit einem Insassenklassifizierungssystem ausgestattet ist, wie es voranstehend als Stand der Technik beschrieben worden ist. Zur Auswertung der von den Sensorgruppen der erfindungsgemäßen Vorrichtung gelieferten Messwerte kann hier einfach die im Beifahrersitz verbaute Auswerteeinheit genutzt werden. Der Verzicht auf eine eigene Auswerteeinheit auf der Fahrerseite ist nicht zuletzt aus Kostengründen sinnvoll.

Auch die Sensorgruppen können im Rahmen der Erfindung grundsätzlich in unterschiedlicher Weise gebildet werden.

Wenn die Sitzposition der zu klassifizierenden Person im wesentlichen bekannt ist, kann die Sitzfläche entsprechend der menschlichen Anatomie in Bereiche eingeteilt werden, die beim Sitzen mehr oder weniger stark belastet werden. Eine zuverlässige Gewichtsklassifizierung kann dann schon aufgrund einzelner Mess-werte vorgenommen werden, die die jeweilige Druckbelastung in diesen definierten Bereichen repräsentativ wiedergeben. In einer vorteilhaften Variante der erfindungsgemäßen Vorrichtung werden daher jeweils die in definierten Bereichen der Sitzfläche angeordneten Sensoren zu einer Sensorgruppe zusammengefasst.

Außerdem ist beim Sitzen in der Regel mit einer Druckverteilung im Sitz zu rechnen, die symmetrisch zu der in Sitzrichtung orientierten Mittelachse der Sitzfläche ist. In einer vorteilhaften Variante der erfindungsgemäßen Vorrichtung sind die Sensoren deshalb symmetrisch zu der in Sitzrichtung orientierten Mittelachse der Sitzfläche angeordnet. Außerdem sind hier jeweils Sensoren zu einer Sensorgruppe zusammengefasst, die in zwei symmetrisch zur Mittelachse angeordneten Bereichen der Sitzfläche angeordnet sind.

Als besonders vorteilhaft im Hinblick auf eine einfache und zuverlässige Auswertung erweist sich die Anordnung der Sensoren in Spalten, die parallel zu der in Sitzrichtung orientierten Mittelachse der Sitzfläche ausgerichtet sind, wenn jeweils die Sensoren mindestens einer Spalte zu einer Sensorgruppe zusammengefasst sind bzw. die Sensoren von mindestens zwei symmetrisch zur Mittelachse angeordneten Spalten zu einer Sensorgruppe zusammengefasst sind.

Die Profilschwerpunkte einer 30kg-Person liegen in einem Abstand von ca. 6cm von der Mittelachse der Sitzfläche, während die Profilschwerpunkte einer 60kg-Person in einem Abstand von ca. 9cm von der Mittelachse liegen und die Profilschwerpunkte einer 90kg-Person in einem Abstand von ca. 12cm von der Mittelachse. Bei entsprechender Einteilung der Gewichtsklassen erweist es sich daher als vorteilhaft, wenn die Sensoranordnung im Abstand von 6cm, 9cm und 12 cm von der Mittelachse der Sitzfläche in Spalten angeordnete und zu Sensorgruppen zusammengefasste Sensoren umfasst.

### Zeichnungen

Wie bereits voranstehend ausführlich erörtert, gibt es unterschiedliche Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnungen verwiesen.

Fig. 1 zeigt schematisch die Sensoranordnung einer erfindungsgemäßen Vorrichtung zur Gewichtsklassifizierung von Personen.

Die Figuren 2a bis 2c zeigen die von einer erfindungsgemäßen Vorrichtung gelieferten Messwerte für eine Person unter 60kg (Fig. 2a), eine Person mit 60kg (Fig. 2b) und eine Person über 60kg (Fig. 2c).

### Beschreibung des Ausführungsbeispiels

Mit der nachfolgend beschriebenen Variante einer erfindungsgemäßen Vorrichtung wird lediglich eine Schwelle zur Gewichtsklassifizierung dargestellt, nämlich die 60kg-Schwelle, um das der Erfindung zugrunde liegende Prinzip zu erläutern. Selbstverständlich können im Rahmen der Erfindung auch Vorrichtungen realisiert werden, mit denen eine differenziertere Gewichtsklassifizierung von Personen vorgenommen werden kann.

Die hier in Rede stehende Vorrichtung soll zur Insassenklassifizierung in einem Kraftfahrzeug auf der Fahrerseite eingesetzt werden, so dass einem Fahrer, der weniger als 60kg wiegt, eine andere Airbagstufe zugeordnet werden kann als einem Fahrer, der mehr als 60kg wiegt.

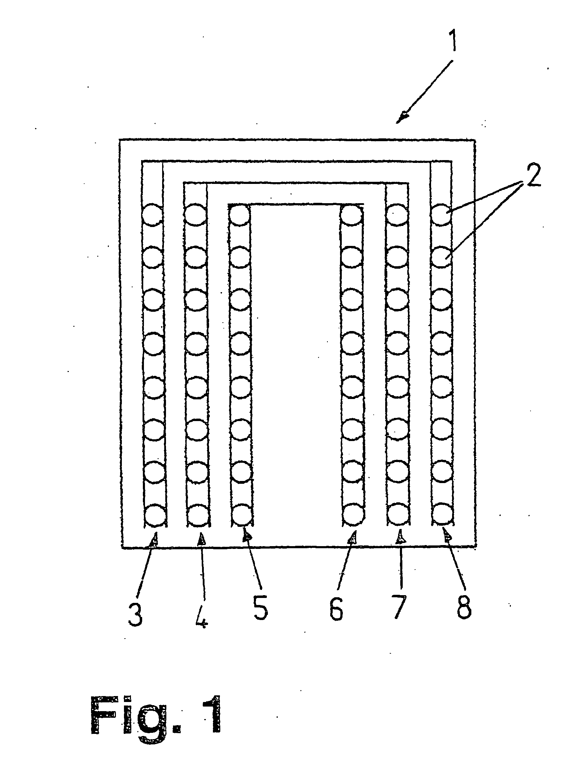

Dazu ist eine Sensoranordnung 1 in Form einer Sensormatte mit druckempfindlichen Sensoren 2 im Fahrersitz des Kraftfahrzeugs verbaut. Die Sensoranordnung 1 ist schematisch in Fig. 1 dargestellt. Des Weiteren umfasst die erfindungsgemäße Vorrichtung eine hier nicht dargestellte Auswerteeinheit. Dabei kann es sich um ein ebenfalls im Fahrersitz verbautes Steuergerät handeln oder auch um ein an anderer Stelle im Fahrzeuginnenraum angeordnetes Steuergerät.

Oftmals ist nicht nur die Fahrerseite sondern auch die Beifahrerseite mit einem Insassenklassifizierungssystem ausgestattet. Die Beifahrerseite stellt hinsichtlich Abweichungen von der normalen Sitzposition, wie z.B. schräges Sitzen, und dem wichtigen Punkt, Kinder und auch Kindersitze zu erkennen und zu beurteilen, eine größere Herausforderung dar, als dies bei der Fahrerseite der Fall ist. Deshalb umfassen Insassenklassifizierungssysteme für die Beifahrerseite in der Regel nicht nur eine im Beifahrersitz verbaute Sensoranordnung sondern auch ein im Beifahrersitz verbautes Steuergerät zur Auswertung der erfassten Messwerte. In einer besonders vorteilhaften, weil kostengünstigen, Variante erfolgt auch die Auswertung der Messwerte, die auf der Fahrerseite mit Hilfe einer erfindungsgemäßen Vorrichtung gewonnen wurden, durch das im Beifahrersitz verbaute Steuergerät.

Erfindungsgemäß sind die Sensoren 2 in Sensorgruppen zusammengefasst, so dass die Auswerteeinheit lediglich einen Messwert pro Sensorgruppe auswertet. Aufgrund der reduzierten Anzahl von auszuwertenden Messwerten vereinfacht sich die Auswertung.

In dem hier dargestellten Ausführungsbeispiel sind die Sensoren 2 der Sensoranordnung 1 schaltungstechnisch in Sensorgruppen zusammengefasst, indem jeweils die Sensoren 2 einer Sensorgruppe parallel geschaltet sind. Der Auswerteeinheit wird hier also auch nur ein Messwert pro Sensorgruppe zugeleitet, so dass nur vergleichsweise wenige Leitungen für die Übermittlung der Messwerte zur Auswerteeinheit erforderlich sind.

Jeweils acht Sensoren 2 sind in Spalten 3 bis 8 angeordnet, die parallel zu der in Sitzrichtung orientierten Mittelachse der Sitzfläche ausgerichtet sind. Die Spalten 3 bis 8 sind außerdem symmetrisch zur Mittelachse der Sitzfläche angeordnet, und zwar in einem Abstand von 6cm, 9cm und 12 cm von der Mittelachse. Diese Werte entsprechen den durchschnittlichen Profilschwerpunkten für eine 30kg-Person, eine 60kg-Person und eine 90kg-Person. Bei der in Fig. 1 dargestellten Sensoranordnung 1 sind jeweils die Sensoren von zwei symmetrisch zur Mittelachse angeordneten Spalten zu einer Sensorgruppe zusammengefasst. Dementsprechend bilden die Sensoren der Spalten 3 und 8 sowie die Sensoren der Spalten 4 und 7 und die Sensoren der Spalten 5 und 6 jeweils eine Sensorgruppe mit sechzehn parallel geschalteten Sensoren.

Wenn nun eine Person auf dem mit der hier dargestellten Sensoranordnung 1 ausgestatteten Sitz Platz nimmt, dann werden die einzelnen Sensoren 2 je nach Gewicht, Hüftknochenabstand und Ausdehnung der betreffenden Person unterschiedlich stark beaufschlagt. Durch Auslesen der drei von der Sensoranordnung 1 gelieferten Messwerte lassen sich Aussagen über die jeweiligen Profileigenschaften treffen. Durch die symmetrische Verschaltung der Sensoren in den einzelnen Sensorgruppen werden Schwankungen der Sitzposition um den mittleren Bereich der Sitzfläche ausgeglichen.

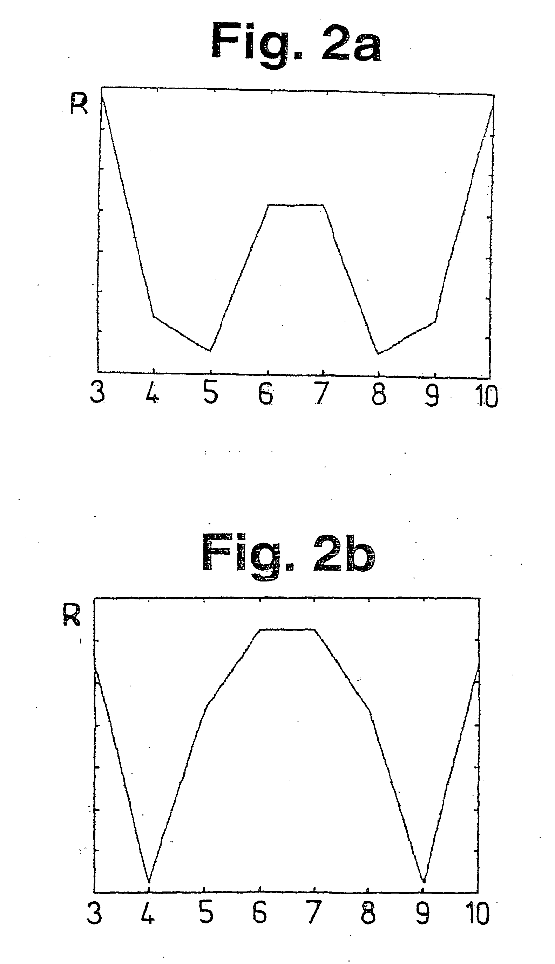

Die als Figuren 2a bis 2c wiedergegebenen Diagramme wurden mit einer Sensormatte, wie sie in Fig. 1 dargestellt ist, für eine Person unter 60kg, eine Person mit 60kg und eine Person über 60kg aufgenommen. Die Sensormatte umfasste insgesamt 108 Sensoren, die in neun Zeilen und zwölf Spalten angeordnet waren. Die Sensoren der symmetrisch zur Mittelachse der Sitzfläche angeordneten Spalten wurden hier rechnerisch parallel geschaltet.

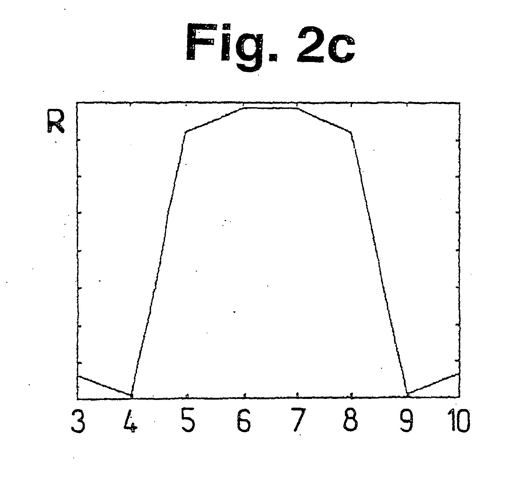

In den Diagrammen - Fig. 2a, Fig. 2b und Fig. 2c ― sind an den x-Stellen 3 bis 6 die Messwerte für jeweils zwei zu einer Sensorgruppe zusammengefasste Spalten der Sensormatte im Abstand von 12cm, 9cm, 6cm und 3cm von der Mittelachse der Sitzfläche dargestellt und an den x-Stellen 7 bis 10 dieselben Messwerte in umgekehrter Reihenfolge. Diese Darstellung soll die symmetrische Druckverteilung in der Sitzfläche veranschaulichen. Auf der y-Achse der Diagramme sind Widerstandswerte in Ohm aufgetragen, die die Messwerte der einzelnen Sensorgruppen der Sensormatte darstellen.

Die Diagramme - Fig. 2a bis Fig. 2c - lassen eine Systematik erkennen, aufgrund derer sich den einzelnen Personen eine Gewichtsklasse zuordnen lässt. Schwerere Personen üben eine stärkere Belastung auf die äußeren Sensorspalten aus, während leichtere Personen mehr Kraft auf den inneren Bereich der Sitzfläche ausüben. Dies ist im wesentlichen darauf zurückzuführen, dass Personen mit grö-ßerem Gewicht im Rahmen der statistischen Variationen in der Bevölkerung auch einen größeren Hüftknochenabstand haben, was als Klassifizierungsmerkmal genutzt werden kann. Durch eine Verhältnisbetrachtung der einzelnen Messwerte zueinander kann eine Klassifizierung vorgenommen werden, wobei Beeinflussungen durch eine variierende Druckverteilung, beispielsweise beim Vorlehnen oder Abstützen mit den Beinen, und durch Temperaturschwankungen ausgleichbar sind.

## Patentansprüche

1. Vorrichtung zur Gewichtsklassifizierung von Personen, insbesondere zur Insassenklassifizierung in einem Kraftfahrzeug,
- mit Sensoranordnung (1), die in einem Sitz für die zu klassifizierende Person verbaut ist, wobei die Sensoren (2) der Sensoranordnung (1) druckempfindlich sind und
- mit einer Auswerteeinheit, **dadurch gekennzeichnet, dass** die Sensoren (2) in Sensorgruppen schaltungstechnisch zusammengefasst sind, so dass die Auswerteeinheit lediglich einen Messwert pro Sensorgruppe auswertet, dass jeweils die Sensoren (2) von zwei symmetrisch zur Mittelachse angeordneten Spalten (3-8) zu einer Sensorgruppe zusammengefasst sind wobei durch eine Verhältnis betrachtung der einzelnen Messwerte zueinander die Klassifizierung vorgenommen wird.

2. Vorrichtung nach Anspruch 1, **dadurch gekennzeichnet, dass** die Sensoren (2) einer Sensorgruppe parallel geschaltet sind.

3. Vorrichtung nach Anspruch 1, **dadurch gekennzeichnet, dass** Spalten (3-8) im Abstand von 6cm, 9cm und 12cm von der Mittelachse vorgesehen sind.

## Claims

1. Apparatus for weight classification of people, in particular for occupant classification in a motor vehicle,
- having a sensor arrangement (1) which is installed in a seat for the person to be classified, with the sensors (2) of the sensor arrangement (1) being pressure-sensitive and
- having an evaluation unit,
**characterized in that** the sensors (2) are combined in terms of circuitry into sensor groups, such that the evaluation unit evaluates only one measured value per sensor group, **in that** the sensors (2) from two columns (3-8) which are arranged symmetrically with respect to the centre axis are in each case combined to form a sensor group, with the classification process being carried out by a ratio analysis of the individual measured values with respect to one another.

2. Apparatus according to Claim 1, **characterized in that** the sensors (2) in a sensor group are connected in parallel.

3. Apparatus according to Claim 1, **characterized in that** columns (3-8) are provided at distances of 6 cm, 9 cm and 12 cm from the centre axis.

## Revendications

1. Dispositif pour classer des personnes selon leur poids, en particulier pour classer des passagers dans un véhicule automobile, comprenant :
- un ensemble de capteurs (1) monté dans un siège pour la personne à classer, les capteurs (2) de l'ensemble de capteurs (1) étant sensibles à la pression, et
- une unité d'exploitation,
**caractérisé en ce que**
les capteurs (2) sont techniquement branchés par groupes de capteurs de sorte que l'unité d'exploitation n'exploite qu'une valeur de mesure par groupe de capteurs, en regroupant respectivement les capteurs (2) de deux colonnes (3-8) disposées symétriquement par rapport à l'axe central en un groupe de capteurs, la classification étant réalisée par une observation de rapports entre les différentes valeurs de mesure.

2. Dispositif selon la revendication 1,
**caractérisé en ce que**
les capteurs (2) d'un groupe de capteurs sont montés en parallèle.

3. Dispositif selon la revendication 1,
**caractérisé en ce que**
les colonnes (3-8) sont prévues à une distance de 6 cm, de 9 cm et de 12 cm par rapport à l'axe central.
